# EUROPEAN PATENT SPECIFICATION

(11) **EP 4 422 964 B1**
(45) Date of publication and mention of the grant of the patent: **08.10.2025**
(21) Application number: 22797501.8
(22) Date of filing: 14.10.2022
(51) Int. Cl.: B62K 25/28, B62M 6/55, B62M 9/16

(54) **PEDAL-ASSISTED BICYCLE WITH REAR SUSPENSION AND RELATED COMPENSATING DEVICE OF THE TRAVEL OF SAID SUSPENSION**
PEDALUNTERSTÜTZTES FAHRRAD MIT HINTERRADAUFHÄNGUNG UND ZUGEHÖRIGE VORRICHTUNG ZUR BEWEGUNGSKOMPENSATION DIESER AUFHÄNGUNG
BICYCLETTE À ASSISTANCE ÉLECTRIQUE AVEC SUSPENSION ARRIÈRE ET DISPOSITIF DE COMPENSATION ASSOCIÉ DE LA COURSE DE LADITE SUSPENSION

(30) Priority: 29.10.2021 IT 202100027782
(43) Date of publication of application: 04.09.2024
(73) Proprietor: Ochain S.r.l., 21100 Varese (IT)
(72) Inventor: DRAGONI, Fabrizio, 21100 VARESE (IT)
(74) Representative: Busca, Andrea
(86) International application number: PCT/IB2022/059847
(87) International publication number: WO 2023/073482

(56) References cited:
- EP-A1- 2 562 071
- WO-A1-2020/194177
- DE-A1- 102013 107 623
- ES-A1- 2 670 470

## Description

The present invention relates to a pedal-assisted bicycle with rear suspension and related compensating device of the travel of said suspension. The invention is particularly adapted to mountain bikes, however applications to other bicycles with other intended uses or other fields are not excluded.

### BACKGROUND ART

Document EP2562071A1 shows the preamble of claim 1. "Full suspended" mountain bikes, i.e. provided with rear suspension, are known in the field of bicycles.

The latter generates a travel of the rear wheel in relation to the frame, with undesirable effects on the drive, in particular a chain pull during compression, such as following a jump or on impact with a bump. This generates a violent rotation of the pedals opposite to the advancement rotation, which destabilizes the rider, up to losing contact with his/her feet. From a mechanical viewpoint, the chain is highly stressed and could end up breaking. The greater the displacement of the wheel with respect to the frame, the more the effect is felt and is damaging.

It is worth noting that there are travel standards according to the category of use of the bicycle. The travel of the modern MTB (mountain bike) frames goes from a minimum of 80 mm (XC race) to a maximum of 240 mm (downhill race). All the other categories are in the middle.

The problem is particularly felt in the "downhill" categories, i.e. those with travel of the rear suspension from 130/140 mm and up. This does not mean that the problem is not felt also in the other categories. Certainly, the travel indicated may be considered a maximum limit that cannot be overcome with the current technology.

The applicant has solved the general problem for "muscle" bicycles by applying to the crankarms, or to the rear hub and pinion assembly, an applied compensating device described in International Patent Application WO2020194177 that allows compensation of the crankarm feedback due to the shock absorber travel.

Such a device, however, is not directly applicable to pedal-assisted bicycles, as the layout of the drive system is more complex and the control system of the electric motor would in principle be deceived by a compensating device as the start of the pedalling is damped and consequently the read torque would not correspond to the power actually required.

The need for compensation for pedal-assisted bicycles with rear shock absorbers therefore remains latent in the industry.

The general purpose of the present invention is to overcome all or part of the problems of the prior art and in particular to enable such latent compensation.

A preferred object of the present invention is to introduce a compensating system that does not deceive the electric motor control system.

A further preferred object of the present invention is to allow easy upgrading of pre-existing pedal-assisted bicycles.

A further preferable object is to provide a compensating system that is easy and inexpensive to implement.

### GENERAL INTRODUCTION

According to a first general aspect thereof, the present invention relates to a pedal-assisted bicycle comprising a frame (5), a rear wheel (10), a suspension system (12) of the rear wheel relative to the frame which allows a predetermined relative displacement (H1) between them, a motion drive system (15) from a crankset (20) to the rear wheel (10), wherein the drive system (15) comprises a crankset (20) fixed to the frame (5), a hub and pinion assembly (22) fixed to the rear wheel (10), and a drive chain (24) positioned to connect them directly to each other, wherein the crankset (20) and the hub and pinion assembly (22) are subject to reciprocal displacement (H1) by the action of the suspension system,
where the crankset (20) comprises:
   - a gear wheel (26) engaged by said chain
   - a muscle torque drive shaft (44), to which the crankarms are coupled and referred to hereafter as the muscle shaft; and
   - a drive unit (25) equipped with an electric motor, and an electric torque drive shaft (45), referred to hereafter as a drive shaft;
characterised in that the crankset (20) comprises:
   - a freewheel device (36) operatively interposed between the drive and muscle shafts (44 and 45);
   - a compensating device (40) operatively interposed between the drive shaft (45) and the gear wheel (26), wherein said device is configured to generate between the two an angular forward compensation stroke (A1) between a rest position corresponding to an absence of chain pull, and a compensation position, corresponding to a chain pull action, wherein said forward compensation stroke is limited to a predetermined angle (A1) and is opposite to the free stroke of the freewheel device (36).

This has led to a virtuous arrangement in which advantageously the muscle shaft has maximum isolation from stress and at the same time there is no loss of functionality in relation to the drive shaft and the drive shaft itself, which is in turn protected.

According to some preferred embodiments, the drive and muscle shafts (44 and 45) are nested and coaxial, so that they rotate about a common axis X.

In general, the freewheel device (36) has an unlimited one-way free stroke, i.e. it is only allowed in one direction of rotation in which it has no end stop.

According to certain preferred embodiments, the bicycle comprises a control system (32) of the drive unit (25) equipped with at least one muscle torque sensor (34) arranged in the crankset in such a way that the freewheel device is operatively interposed between said sensor and the drive shaft (45).

In this way, there is advantageously no false triggering of the drive torque of the motor due to the stress of a jump or rough ground.

For example, this sensor is operatively coupled to at least one of the following elements of the crankset: a crankarm (42), a pedal, the muscle shaft (44).

According to some preferred embodiments, the compensating device (40) comprises two main bodies (46, 48), rotatable with respect to each other about an axis (X) coaxial to the drive shaft (45), wherein one of the two bodies has an opening (52) configured for shape coupling with said shaft.

In that case, preferably between the two main bodies (46, 48) there are operatively interposed recall means (72) towards the resting position, corresponding to a condition of no chain pull, wherein the recall means (72) act for the whole forward compensating stroke A1.

According to a preferred general feature of the invention, radial bearing means (80) are interposed between the main bodies (46, 48).

For example, radial bearing means (80) are radial, and include at least one pad (82) made of or treated with a low-friction radial material.

According to some preferred embodiments, said compensating device (40) comprises a return stroke equal to the forward compensating stroke, and said compensating device (40) comprises damper means (108a, 108b) which act only in the final stretches of said respective forward compensating stroke (A1) and return stroke by opposing them.

### DETAILED DESCRIPTION

Further characteristics and advantages of the present invention will become clearer from the following detailed description of the preferred embodiments thereof, with reference to the appended drawings and provided by way of indicative and non-limiting example.
- figure 1 schematically shows a bicycle according to the present invention;
- figure 2 shows the detail of the drive system of figure 1;
- figure 3 shows the crankset of the drive system of figure 2;
- figure 4 shows the compensating device of the crankset of figure 3;
- figure 5 schematically represents the compensating device of figure 4 mounted on the drive unit of the crankset of figure 3;
- figure 6 schematically represents an exploded view assembly diagram of the compensating device on the shafts of the crankset of figure 3;
- figures 7 and 8 respectively represent the compensating device in which the inside of the compensating device of figure 4 where some components have been removed to allow the inside to be seen.

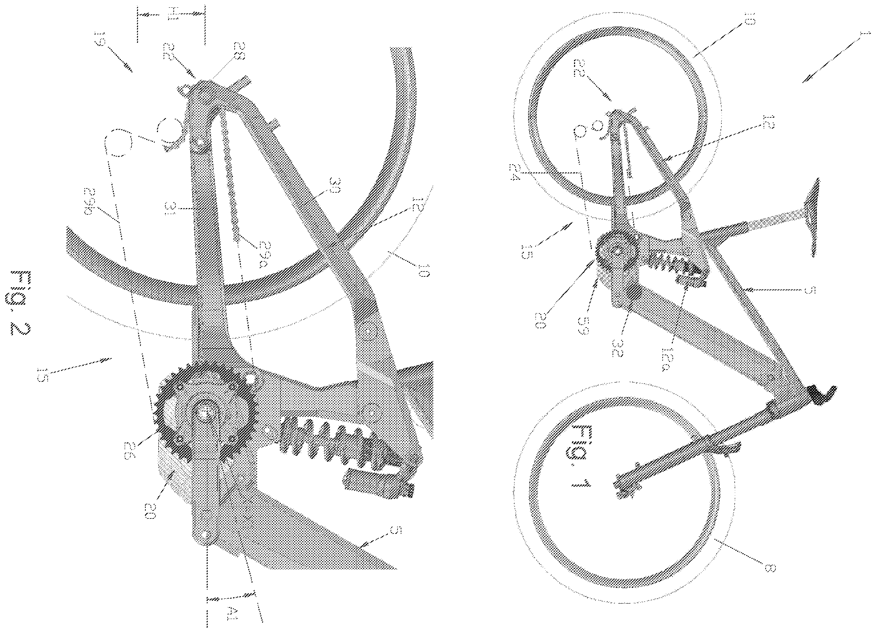

Figure 1 shows a pedal-assisted bicycle according to the present invention, indicated as a whole by reference number 1.

The bicycle 1 comprises a frame 5, a front wheel 8, a rear wheel 10, a suspension system 12 of the rear wheel 10, a drive system 15 for putting the rear wheel 10 into rotation by means of a crankset 20 fixed to the frame 5.

The suspension system 12 may be of any applicable type, for example comprise suspension arms 30, 31 (figure 2) which are articulated to one another and to the frame to allow a predetermined oscillation of the wheel 10, and comprise oscillation damper means 12a.

In addition to the crankset 20, the drive system 15 also comprises a rear hub and pinion assembly 22 fixed to the wheel 10 and a drive chain 24 which transmits the motion between the two.

During use, the oscillation H1 of the rear wheel 10 results in the oscillation of the hub assembly 22 with respect to the crankset 20 and accordingly, a pull on the chain 24.

The crankset 20 and the rear hub and pinion assembly 22 in particular each comprise at least one gear wheel 26 and 28, and the chain 24 forms a ring with which it engages them, both having two stretches 29a and 29b suspended between said wheels. When the rear wheel 10 oscillates upwards due to a bump or jump, the chain is subjected to pulling. The phenomenon is known with the name "pedal kickback".

In general, the upper stretch of chain 29a is subjected to pulling, while the lower stretch 29b is slack. This may occur for example, because it is in general preferable for the drive system to comprise a gear 19 with an articulated arm, for example of the traditional type comprising a rocker and cage, oscillating due to elastic suspension which compensates for the pulling stresses on the lower stretch 29b of the chain.

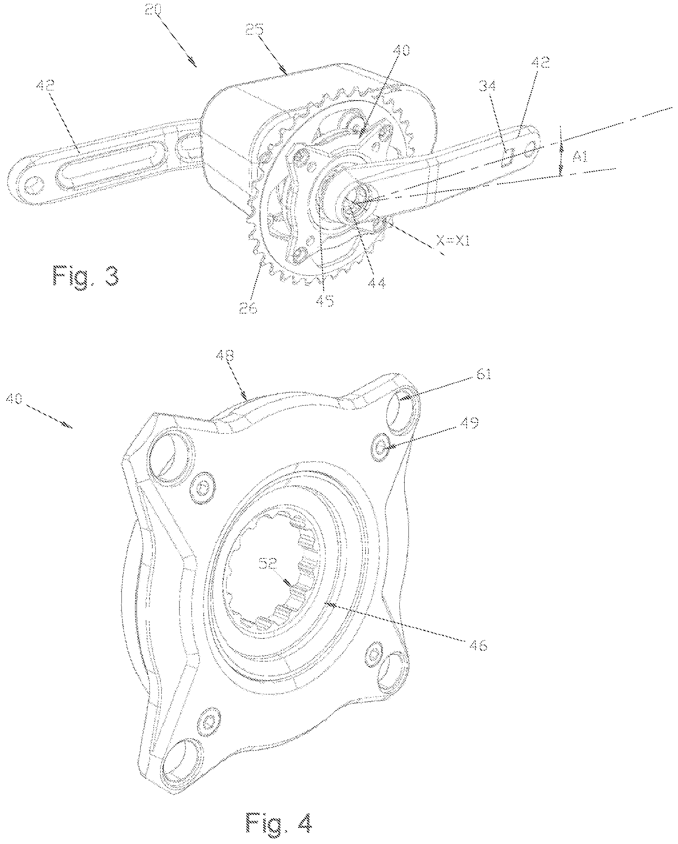

With reference to figure 3, the crankset 20 comprises a pair of crankarms 42, a gear wheel 26 and a drive unit 25 operatively interposed between them and equipped with an electric motor.

In general, the crankset has one direction of rotation for transmitting torque for the advancement of the bicycle, referred to hereafter as forward direction, and an opposite direction of rotation without torque transmission.

The crankset is configured to allow the crankarms to rotate both in the forward direction, where they transmit torque to the gear wheel 26, and in the opposite direction, where they do not transmit torque.

The drive unit 25 comprises an electric torque drive shaft 25, referred to hereafter as drive shaft.

The crankset 20 comprises a muscle torque drive shaft 44, referred to hereafter as the muscle shaft.

The drive and muscle shafts 44 and 45 are coaxial and nested with each other, so that they rotate about a common axis X.

A one-way freewheel device 36 is operatively interposed between the two shafts 44 and 45. The one-way freewheel 36 is configured to allow the muscle shaft 44 to drag the crankshaft 45 into rotation when pedalling in the forward direction, conversely, for pedalling in the opposite direction the freewheel transmits no torque and therefore allows free and unrestricted rotation of the muscle shaft 44, and hence of the crankarms, with respect to the drive shaft 45.

In this way the freewheel device 36 generally:
- allows the transmission of torque from the muscle drive shaft 44 to the electric drive shaft 45 but not vice versa.

The bicycle comprises a control system 32 of the drive unit 25 equipped with at least one torque sensor 34, e.g. a torque meter, comprised in the crankset 20, preferably operatively coupled to a crankarm 42, or to a pedal (not shown) or to the muscle shaft 44, to read thereon at least one datum from which to derive the muscle torque applied by the cyclist during pedalling.

The control system is programmed to process at least one torque datum and control the motor unit 25 to deliver an electric motor torque proportionate thereto.

A compensating device 40 is operatively interposed between the drive shaft 45 and the gear wheel 26.

The compensating device 40 allows a free rotation A1 between the gear wheel 26 and the drive shaft 45 of a predetermined magnitude. The magnitude of A1 determines the amount of oscillation H1 that can be compensated for, as well as the amount of idle travel of the drive shaft 45 during the resumption of torque transmission due to the resumption of pedalling.

The relative rotation A1 is also known as compensating stroke and takes place both in the forward and reverse direction between two ends known as "end stops". In particular, there is a resting end stop end 104, corresponding to no chain pull, and a compensating end stop end 62, corresponding to the position taken on in the presence of the maximum chain pull that can be offset.

In general, schematically we have the following arrangement:
- The drive and muscle shafts 44 and 45 are nested and coaxial;
- The freewheel device 36 is operatively interposed between them
- The compensating device is operatively interposed between the drive shaft 45 and the gear wheel 26 with forward free stroke opposite the free stroke of the freewheel device.

This means that the drive shaft 45 is operatively interposed between the freewheel device 36 and the compensating device 40, such that the free stroke A1 of the gear wheel 26 between the resting end stop 104 and the compensation end stop 62 is in the opposite direction to the free rotation of the freewheel device 36, so that the two free rotation effects are not added together. In other words, when there is a free forward stroke A1 between the gear wheel 26 and the drive shaft 45, this does not cause the drive shaft 45 to rotate as the gear wheel 26 does with respect to the muscle shaft 44, but the two remain stationary with respect to each other due to the effect of the freewheel device between them.

If the rear wheel travel H1 has to be dampened by a jump or rough ground, the pedals can remain stationary and stably hold both the muscle and motor shafts, while the compensating device 40 allows the partial rotation A1 of the gear wheel 26 so that neither the muscle shaft 44 nor the drive shaft 45 perceives the recoil. After receiving the jump, the gear wheel 26 completes the return stroke A1, but again does not move the drive shaft 45 or trigger the drive unit.

The pedals have not provided any muscle torque and the arrangement of the sensors does not allow the return stroke A1 to be read as a torque, so motor unit 25 remains inactive as a result of both the forward and return stroke A1. As a result, the cyclist does not feel any instability.

In the case of resuming pedalling after a break, the torque supplied by the cyclist is transmitted via the freewheel 36 to the drive shaft 45 and consequently to the compensating device 40, which engages the chain after the stroke A1, generating the resistant torque which in turn generates the signal to the motor to supply power. Consequently, the cyclist does not feel any instability here either.

It would have been different if the compensating device 40 had been coupled directly to the muscle shaft instead of the motor shaft, as the stroke A1 could have been read as torque and could have triggered the motor thrust.

Ultimately, the crankarms 42 are mounted on the muscle drive shaft 44, the latter not acting directly on the gear wheel 26, but through the operative interposition of the drive shaft 45, the freewheel device 36 and the compensating device 40, where the mounting of the last two with respect to the drive shaft 45 is synergistic.

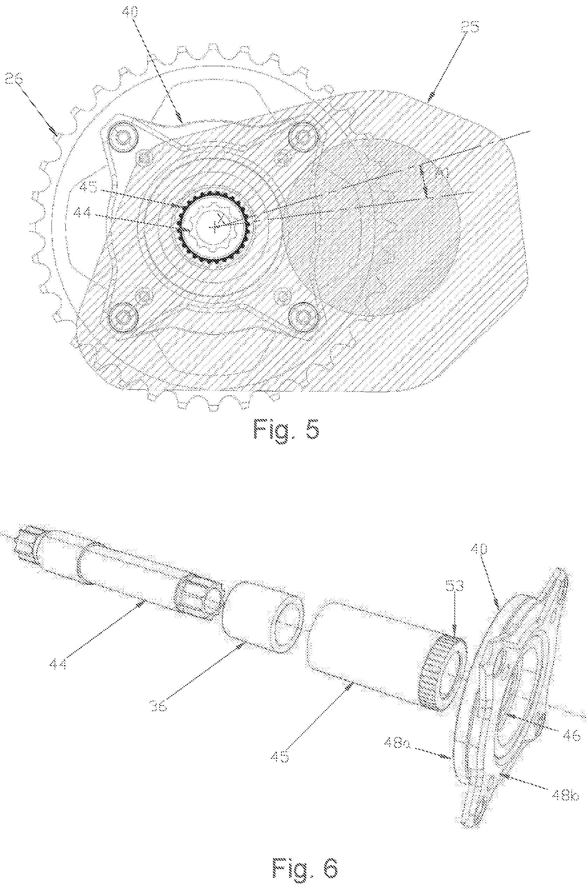

Referring to figures 4 to 8, the compensating device 40 comprises a first and a second main body 46, 48 coupled together, which are rotatable with respect to each other about an axis X1.

The first main body 46 is configured to be shape coupled with the drive shaft 45. In particular, the first main body 46 comprises an opening 52 with a shape complementary to a profile 53 shaped for the torque transmission of the drive shaft 45 and such that, in the assembled condition on the crankset 20, the rotation axes X and X1 of the shaft and of the compensating device 40 coincide. The first main body 46 is therefore generally rotationally integral with the electric drive shaft 45, but not necessarily with the muscle drive shaft 44, due to the free wheel 36.

The second main body 48 is a shell comprising the gear wheel 26 or a plurality of coupling points 61 to the gear wheel 26. The shell 48 preferably is divided into two half-shells 48a and 48b that can be coupled to and uncoupled from each other. The first main body 46 is housed in the second main body 48 in rotatable manner with respect thereto, about axis X of the shaft 44. The first body 46 is retained in the second body 48 when the two half-shells 48a and 48b are sandwiched to each other, for example by means of screws 49.

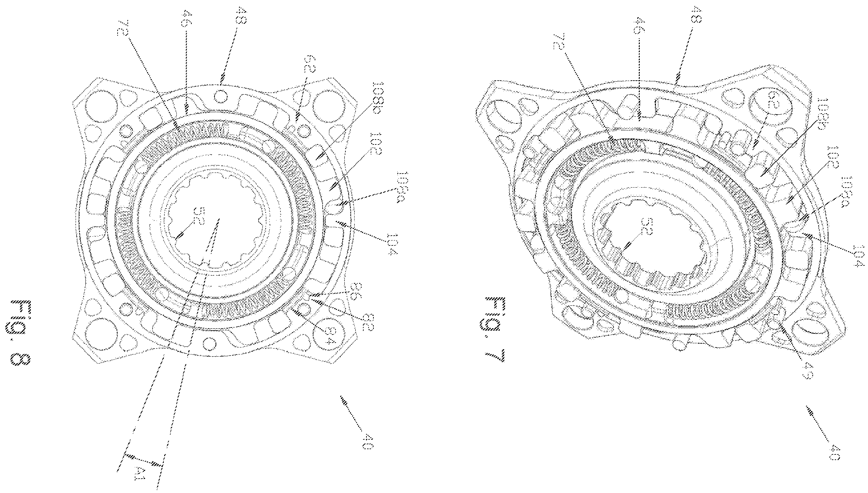

With reference to figures 7 and 8, the compensating device 40 is shown without the half shell 48a for descriptive clarity. The crankset is of the type intended to be mounted on the right side of the bicycle, as seen by an observer riding the bicycle and with reference to the direction of travel.

The device 40 generally comprises means for defining the compensating stroke A1, comprising at least one stop element 102, which is integral with one of the two main bodies 46 and 48, interposed between a pair of end elements 104 and 62 of the compensating stroke A1 which are integral with the other main body. The stop element 102 alternately abuts against the end elements 104 and 62, defining the stroke A1; in general its course is a sector of a circle about the rotation axis X1 of the bodies 46, 48. In particular, as shown in figure 7, when the stop element 102 abuts on the end element 104, the compensating device 40 is in the resting position, corresponding to no chain pull, i.e. when the suspension system is extended and the rear wheel is therefore at its maximum travel length H1. For this reason, element 104 is also called the resting end element.

When, as shown in figure 8, the stop element 102 is abutting on the end element 62, the device 40 is in its position of maximum compensation, i.e. in the presence of chain pull that caused the main bodies 46 and 48 to rotate with respect to each other by an amount equal to the compensating stroke A1, wherein the chain pull was generated by a travel of the rear wheel that reduced the length H1 with respect to the resting position. For this reason, element 62 is also called the compensating end element.

Respective damper means 108a and 108b are preferably interposed between the stop element 102 and the end elements 104 and 62 to damp the abutment thereof at the respective end of stroke A1. These comprise, for example, one or more bodies made of elastomeric material.

Recall means 72 that keep the compensating device 40 in the resting position, whereby it acts in opposition to the chain pull, are generally interposed between the main bodies 46 and 48. The recall means 72, for example, are elastic and preferably comprise one or more springs, e.g. helical springs, housed in circumferential seats obtained between the two main bodies 46 and 48. Said elastic means 72 are compressed by the relative rotation between the main bodies 46 and 48 during the stroke A1 to go from the resting position to the position of maximum compensation. The recall means 72 are generally overridden to exert their action in every position of the stroke A1.

Between the main bodies 46 and 48, radial bearing means 80, preferably radial, are interposed. They comprise, for example, a plurality of pads 82 each comprising a main body 84 shaped like an arc of a circle and arranged coaxial to the axis X. The pads 82 are for example embedded in one of the two main bodies 46 and 48 by means of a radial protuberance 86 projecting into a relative seat of one of the two main bodies 46, 48.

At least part of the main body 82 of the pad, preferably the entire pad, is made of or treated with low sliding friction material, e.g. Teflon.

Radial bearing means are an advantageous aspect both in the present case of applying the compensating device 40 to a pedal-assisted bicycle, but also to compensating devices 40 for fully muscular bicycles (i.e. without an electric motor and drive shaft). In the second case, therefore, the coupling opening 52 will be configured for coupling to a bicycle muscle shaft.

When used downhill and/or in a jump, the rider rests on the pedals with the crankarms 42 arranged horizontally (position of maximum stability). In this position, the compensating device is in the resting condition due to the thrust of the recall means 72. When the rear wheel is raised due to an impact, it generates the chain pull which drags the gear wheel 26 into rotation with respect to the electric drive shaft 45 for the stretch of compensating stroke A1, placing the compensating device 40 in the condition of maximum stroke, or in an intermediate condition, depending on the stress experienced. Such stroke is considered the forward stroke.

When the rider resumes pedalling from the rest position, the sensors read the muscle torque applied by the rider and trigger the action of the electric motor, which applies torque to the electric drive shaft 45, which in turn causes the compensating device 40 to make the same forward stroke rotation A1 until the maximum stroke position.

### GENERAL INTERPRETATION OF TERMS

In understanding the object of the present invention, the term "comprising" and its derivatives, as used herein, are intended as open-ended terms that specify the presence of declared characteristics, elements, components, groups, integers and/or steps, but do not exclude the presence of other undeclared characteristics, elements, components, groups, integers and/or steps. The above also applies to words that have similar meanings such as the terms "comprised", "have" and their derivatives. Furthermore, the terms "part", "section", "portion", "member" or "element" when used in the singular can have the double meaning of a single part or a plurality of parts. As used herein to describe the above executive embodiment(s), the following directional terms "forward", "backward", "above", "under", "vertical", "horizontal", "below" and "transverse", as well as any other similar directional term, refers to the embodiment described in the operating position. Finally, terms of degree such as "substantially", "about" and "approximately" as used herein are intended as a reasonable amount of deviation of the modified term such that the final result is not significantly changed.

## Claims

1. Pedal-assisted bicycle comprising a frame (5), a rear wheel (10), a suspension system (12) of the rear wheel relative to the frame which allows a predetermined relative displacement (H1) between them, a motion drive system (15) from a crankset (20) to the rear wheel (10), wherein the drive system (15) comprises a crankset (20) fixed to the frame (5), a hub and pinion assembly (22) fixed to the rear wheel (10), and a drive chain (24) positioned to connect them directly to each other, wherein the crankset (20) and the hub and pinion assembly (22) are subject to reciprocal displacement (H1) by the action of the suspension system,
where the crankset (20) comprises:
- a gear wheel (26) engaged by said chain
- a muscle torque drive shaft (44), to which the crankarms are coupled and referred to hereafter as the muscle shaft; and
- a drive unit (25) equipped with an electric motor, and an electric torque drive shaft (45), referred to hereafter as a drive shaft;
**characterised in that** the crankset (20) comprises:
- a freewheel device (36) operatively interposed between the drive and muscle shafts (44 and 45);
- a compensating device (40) operatively interposed between the drive shaft (45) and the gear wheel (26), wherein said device is configured to generate between the two an angular forward compensation stroke (A1) between a rest position corresponding to an absence of chain pull, and a compensation position, corresponding to a chain pull action, wherein said forward compensation stroke is limited to a predetermined angle (A1) and is opposite to the free stroke of the freewheel device (36).

2. Bicycle according to claim 1, **characterised by** the fact that the drive and muscle shafts (44 and 45) are nested and coaxial, so that they rotate about a common axis X.

3. Bicycle according to claim 1 or 2, **characterised in that** the freewheel device (36) has an unlimited one-way free stroke.

4. Bicycle according to any one of the preceding claims **characterised in that** it comprises a control system (32) of the drive unit (25) equipped with at least one muscle torque sensor (34) arranged in the crankset in such a way that the freewheel device is operatively interposed between said sensor and the drive shaft (45).

5. Bicycle according to claim 4, **characterised in that** said sensor is operatively coupled to at least one of the following elements of the crankset: a crankarm (42), a pedal, the muscle shaft (44).

6. Bicycle according to any one of the preceding claims **characterised in that** the compensating device (40) comprises two main bodies (46, 48), rotatable with respect to each other about an axis (X) coaxial to the drive shaft (45), wherein one of the two bodies has an opening (52) configured for shape coupling with said shaft.

7. Bicycle according to claim 6, **characterised in that** between the two main bodies (46, 48) there are operatively interposed recall means (72) towards the resting position, corresponding to a condition of no chain pull, wherein the recall means (72) act for the whole forward compensating stroke A1.

8. Bicycle according to claim 6 or 7, **characterised in that** radial bearing means (80) are interposed between the main bodies (46, 48).

9. Bicycle according to claim 8, **characterised in that** the radial bearing means (80) are radial, and comprise at least one pad (82) made of or treated with low friction radial material.

10. Bicycle according to any one of the preceding claims, **characterised in that** said compensating device (40) comprises a return stroke equal to the forward compensating stroke, and said compensating device (40) comprises damper means (108a, 108b) which act only in the final stretches of said respective forward compensating stroke (A1) and return stroke by opposing them.

## Patentansprüche

1. Fahrrad mit Tretunterstützung, umfassend einen Rahmen (5), ein Hinterrad (10), ein Aufhängungssystem (12) des Hinterrads relativ zum Rahmen, das eine vorbestimmte relative Verschiebung (H1) zwischen ihnen ermöglicht, ein Bewegungsantriebssystem (15) von einer Kurbelgarnitur (20) zum Hinterrad (10), wobei das Antriebssystem (15) eine am Rahmen (5) befestigte Kurbelgarnitur (20), eine Naben- und Ritzelanordnung (22), die am Hinterrad (10) befestigt ist, und eine Antriebskette (24), die positioniert ist, um sie direkt miteinander zu verbinden, umfasst, wobei die Kurbelgarnitur (20) und die Naben- und Ritzelanordnung (22) durch die Wirkung des Aufhängungssystems einer gegenseitigen Verschiebung (H1) unterliegen,
wobei die Kurbelgarnitur (20) umfasst:
- ein Zahnrad (26), in das die Kette eingreift
- eine Muskeldrehmomentantriebswelle (44), an die die Kurbelarme gekoppelt sind und die im Folgenden als Muskelwelle bezeichnet wird; und
- eine Antriebseinheit (25), die mit einem Elektromotor ausgestattet ist, und eine Antriebswelle (45) mit elektrischem Drehmoment, die im Folgenden als Antriebswelle bezeichnet wird;
**dadurch gekennzeichnet, dass** die Kurbelgarnitur (20) umfasst:
- eine Freilaufvorrichtung (36), die betriebswirksam zwischen der Antriebs- und der Muskelwelle (44 und 45) eingefügt ist;
- eine Ausgleichsvorrichtung (40), die betriebswirksam zwischen der Antriebswelle (45) und dem Zahnrad (26) eingefügt ist, wobei die Vorrichtung so konfiguriert ist, dass sie zwischen den zwei einen winkligen Vorwärtsausgleichshub (Al) zwischen einer Ruheposition, die einem Fehlen von Kettenzug entspricht, und einer Ausgleichsposition, die einer Kettenzugwirkung entspricht, erzeugt, wobei der Vorwärtsausgleichshub auf einen vorbestimmten Winkel (Al) begrenzt ist und dem freien Hub der Freilaufvorrichtung (36) entgegengesetzt ist.

2. Fahrrad nach Anspruch 1, **dadurch gekennzeichnet, dass** die Antriebs- und die Muskelwelle (44 und 45) verschachtelt und koaxial sind, so dass sie sich um eine gemeinsame Achse X drehen.

3. Fahrrad nach Anspruch 1 oder 2, **dadurch gekennzeichnet, dass** die Freilaufvorrichtung (36) einen unbegrenzten Einweg-Freihub aufweist.

4. Fahrrad nach einem der vorhergehenden Ansprüche, **dadurch gekennzeichnet, dass** es ein Steuersystem (32) der Antriebseinheit (25) umfasst, das mit mindestens einem Muskeldrehmomentsensor (34) ausgestattet ist, der in der Kurbelgarnitur so angeordnet ist, dass die Freilaufvorrichtung betriebswirksam zwischen dem Sensor und der Antriebswelle (45) eingefügt ist.

5. Fahrrad nach Anspruch 4, **dadurch gekennzeichnet, dass** der Sensor mit mindestens einem der folgenden Elemente der Kurbelgarnitur betriebswirksam gekoppelt ist: einem Kurbelarm (42), einem Pedal, der Muskelwelle (44).

6. Fahrrad nach einem der vorhergehenden Ansprüche, **dadurch gekennzeichnet, dass** die Ausgleichsvorrichtung (40) zwei Hauptkörper (46, 48) umfasst, die in Bezug zueinander um eine zur Antriebswelle (45) koaxiale Achse (X) drehbar sind, wobei einer der zwei Körper eine Öffnung (52) aufweist, die zur Formkopplung mit der Welle konfiguriert ist.

7. Fahrrad nach Anspruch 6, **dadurch gekennzeichnet, dass** zwischen den zwei Hauptkörpern (46, 48) Rückstellmittel (72) in Richtung der Ruheposition betriebswirksam eingefügt sind, die einem Zustand ohne Kettenzug entspricht, wobei die Rückstellmittel (72) für den gesamten Vorwärtsausgleichshub Al wirken.

8. Fahrrad nach Anspruch 6 oder 7, **dadurch gekennzeichnet, dass** zwischen den Hauptkörpern (46, 48) Radiallagermittel (80) eingefügt sind.

9. Fahrrad nach Anspruch 8, **dadurch gekennzeichnet, dass** die Radiallagermittel (80) radial sind und mindestens einen Belag (82) umfassen, der aus einem radialen Material mit geringer Reibung hergestellt oder damit behandelt ist.

10. Fahrrad nach einem der vorhergehenden Ansprüche, **dadurch gekennzeichnet, dass** die Ausgleichsvorrichtung (40) einen Rückhub umfasst, der gleich dem Vorwärtsausgleichshub ist und die Ausgleichsvorrichtung (40) Dämpfungsmittel (108a, 108b) umfasst, die nur in den Endabschnitten des jeweiligen Vorwärtsausgleichshubs (Al) und Rückhubs wirken, indem sie diesen entgegenwirken.

## Revendications

1. Vélo à pédalage assisté comprenant un cadre (5), une roue arrière (10), un système de suspension (12) de la roue arrière par rapport au cadre qui permet un déplacement relatif prédéterminé (H1) entre eux, un système d'entraînement de mouvement (15) d'un pédalier (20) à la roue arrière (10), dans lequel le système d'entraînement (15) comprend un pédalier (20) fixé au cadre (5), un ensemble moyeu-pignon (22) fixé à la roue arrière (10), et une chaîne d'entraînement (24) positionnée pour les relier directement l'un à l'autre, le pédalier (20) et l'ensemble moyeu-pignon (22) étant soumis à un déplacement réciproque (H1) sous l'action du système de suspension,
où le pédalier (20) comprend :
- une roue dentée (26) engagée par ladite chaîne
- un arbre d'entraînement du couple musculaire (44), auquel les manivelles sont accouplées et qui est désigné ci-après comme l'arbre musculaire ; et
- une unité d'entraînement (25) équipée d'un moteur électrique, et un arbre d'entraînement du couple électrique (45), ci-après dénommé arbre d'entraînement ;
**caractérisé en ce que** le pédalier (20) comprend :
- un dispositif de roue libre (36) interposé fonctionnellement entre l'arbre moteur et l'arbre musculaire (44 et 45) ;
- un dispositif de compensation (40) interposé fonctionnellement entre l'arbre d'entraînement (45) et la roue dentée (26), ledit dispositif étant configuré pour générer entre les deux une course angulaire de compensation vers l'avant (Al) entre une position de repos correspondant à une absence de traction de la chaîne et une position de compensation correspondant à une traction de la chaîne, ladite course de compensation vers l'avant étant limitée à un angle prédéterminé (Al) et opposée à la course libre du dispositif de roue libre (36).

2. Vélo selon la revendication 1, **caractérisé en ce que** les arbres moteur et musculaire (44 et 45) sont emboîtés et coaxiaux, de sorte qu'ils tournent autour d'un axe commun X.

3. Vélo selon la revendication 1 ou 2, **caractérisé en ce que** le dispositif de roue libre (36) a une course libre unidirectionnelle illimitée.

4. Vélo selon l'une quelconque des revendications précédentes **caractérisé en ce qu'**il comprend un système de commande (32) de l'unité d'entraînement (25) équipé d'au moins un capteur de couple musculaire (34) disposé dans le pédalier de telle sorte que le dispositif de roue libre est interposé fonctionnellement entre ledit capteur et l'arbre d'entraînement (45).

5. Vélo selon la revendication 4, **caractérisé en ce que** ledit capteur est couplé fonctionnellement à au moins un des éléments suivants du pédalier : un bras de manivelle (42), une pédale, l'arbre musculaire (44).

6. Vélo selon l'une quelconque des revendications précédentes **caractérisé en ce que** le dispositif de compensation (40) comprend deux corps principaux (46, 48), rotatifs l'un par rapport à l'autre autour d'un axe (X) coaxial à l'arbre d'entraînement (45), dans lequel l'un des deux corps présente une ouverture (52) configurée pour un accouplement de forme avec ledit arbre.

7. Vélo selon la revendication 6, **caractérisé en ce qu'**entre les deux corps principaux (46, 48) sont interposés fonctionnellement des moyens de rappel (72) vers la position de repos, correspondant à une condition d'absence de traction de la chaîne, dans laquelle les moyens de rappel (72) agissent pour l'ensemble de la course de compensation avant Al.

8. Vélo selon la revendication 6 ou 7, **caractérisé en ce que** des moyens d'appui radial (80) sont interposés entre les corps principaux (46, 48).

9. Vélo selon la revendication 8, **caractérisé en ce que** les moyens d'appui radial (80) sont radiaux et comprennent au moins un tampon (82) constitué d'un matériau radial à faible friction ou traité avec un tel matériau.

10. Vélo selon l'une quelconque des revendications précédentes, **caractérisé en ce que** ledit dispositif de compensation (40) comprend une course de retour égale à la course de compensation avant, et ledit dispositif de compensation (40) comprend des moyens amortisseurs (108a, 108b) qui agissent uniquement dans les derniers tronçons de ladite course de compensation avant (Al) et de la course de retour respectives en les opposant.
